Europäisches Patentamt

European Patent Office

Office européen des brevets

(11) Publication number : **0 150 533 B2**

(12) # NEW EUROPEAN PATENT SPECIFICATION

(45) Date of publication of the new patent
specification : **17.08.94 Bulletin 94/33**

(51) Int. Cl.$^5$ : **C10J 3/46, C10J 3/48**

(21) Application number : **84201844.2**

(22) Date of filing : **12.12.84**

(54) **Process and apparatus for the production of synthesis gas.**

(30) Priority : **11.01.84 GB 8400639**

(43) Date of publication of application :
**07.08.85 Bulletin 85/32**

(45) Publication of the grant of the patent :
**05.04.89 Bulletin 89/14**

(45) Mention of the opposition decision :
**17.08.94 Bulletin 94/33**

(84) Designated Contracting States :
**BE DE FR GB IT NL**

(56) References cited :
**EP-A- 0 013 580**
**EP-A- 0 115 094**
**GB-A- 749 311**
**GB-A- 793 466**

(56) References cited :
**GB-A- 837 307**
**Memorandum zur Auslegung einer Shell-**
**Koppers-Vergasung mit einem**
**Kohledurchsatz von 1000 tato/Einheit. Nov.**
**1979, Seiten 69,70,71,72 V2-V- Linke/MA**

(73) Proprietor : **SHELL INTERNATIONALE**
**RESEARCH MAATSCHAPPIJ B.V.**
**Carel van Bylandtlaan 30**
**NL-2596 HR Den Haag (NL)**

(72) Inventor : **van der Burgt, Maarten Johannes**
**Carel van Bylandtlaan 30**
**NL-2596 HR The Hague (NL)**
Inventor : **Harenslak, Gerd**
**Carel van Bylandtlaan 30**
**NL-2596 HR The Hague (NL)**

(74) Representative : **Aalbers, Onno et al**
**P.O. Box 162**
**NL-2501 AN The Hague (NL)**

EP 0 150 533 B2

## Description

The invention relates to a process for the production of synthesis gas wherein:

a) a finely divided carbonaceous fuel is partially combusted with an oxygen-containing gas at elevated temperature and pressure in a gasification reactor, yielding liquid slag and synthesis gas;

b) part of the liquid slag is removed from the bottom of the gasification reactor;

c) hot crude synthesis gas containing entrained slag droplets leaves the top of the gasification reactor and is removed from the top of the gasification reactor to a waste heat boiler;

d) the crude synthesis gas is passed downwards through the said waste heat boiler to cool it further;

e) the cooled synthesis gas is removed from the lower part of the said waste heat boiler.

The invention also relates to an apparatus for carrying out the above process, comprising the following components:

a) a vertically positioned gasification reactor with a gas outlet at the top and the slag outlet at the bottom;

b) a waste heat boiler provided with a gas inlet near its top and a gas outlet near its bottom, and with cooling tubes;

c) connecting means connecting the gas outlet of the reactor with the gas inlet of the said waste heat boiler.

In known processes for the production of synthesis gas molten slag droplets are entrained by the produced synthesis gas. However, it appears that before complete solidification the slag droplets are sticky and tend to adhere to walls and cooling tubes of heat exchanging equipment. The present invention solves this problem and provides a process wherein sticky slag particles do not adhere to a cooled tube with a smooth inner wall, said tube connecting the gasifier to a waste heat boiler located adjacent to the gasifier.

Therefore the slag droplets-containing syngas is passed through such a tube and only after complete solidification of the slag droplets it is further cooled in the waste heat boiler.

Therefore, the method of the invention is characterized by the following steps:

f) the said hot crude synthesis gas leaving the top of the gasification reactor is passing upwards at an average linear velocity ranging from 4 to 40 m/s through a single connection tube of uniform diameter with a smooth inner wall, said single tube connecting the top outlet of said reactor to the waste heat boiler which as a whole is located adjacent or next to said reactor;

g) along at least a part of the said single connection tube a coolant is passed in indirect heat exchange with the crude synthesis gas so that the crude synthesis gas is cooled in the single connection tube to a temperature in the range from 600 to 1200 °C and the slag droplets solidify;

the inlet temperature of the coolant being between 100 and 400 °C and the outlet temperature being between 200 and 600 °C.

The apparatus of the invention for carrying out the above process is characterized in that:

d) the whole waste heat boiler is located adjacent or next to the said reactor;

e) the gas inlet of the waste heat boiler is connected to the gas outlet of the reactor through a single connection tube of uniform diameter, which connection tube has a smooth inner surface and runs at least for a major part in an upward direction;

f) an outer pipe surrounding at least a part of said single connection tube, said pipe being provided with an inlet and outlet for coolant and wherein the ratio between the inner diameter of the gasification reactor and the inner diameter of the said connection tube ranges from 2 to 15 and wherein the said tube has an inner diameter in the range of 0.1 to 2.0 metres.

In a possible embodiment the heat exchanger is arranged obliquely. However, the heat exchanger is preferably vertically positioned.

It can be remarked that from EP-A-13,580 is known a process for cooling of hot gas streams from the gasification of coal, wherein the hot gas laden with molten ash particles is passed into a steam generating heat exchanger.

The hot gas with entrained molten ash particles passes upwardly through a vertical radiant cooler, where the gas is cooled so that the ash is no longer molten when leaving the radiant cooler, before entering a first convective cooler and passing downwards through to a second convective cooler and subsequently to gas cleaning and processing operations downstream of the heat exchanger.

However, the hot gas is not cooled until passing the heat exchanger. Thus, the arrangement of EP-A-13,580 is subject to the risk of sticky particles adhering to the walls and cooling tubes of the heat exchanger.

Further, GB-A-793,466 discloses the problem of cooling synthesis gas resulting from the gasification of pulverulent fuels, whereby pulverulent gasification residues entrained in the hot gas are prevented from settling on the tubes by high gas speeds. The apparatus consisting of a gasification chamber surmounted by a radiant boiler which is connected to a gas conduit which in turn is connected to a tube boiler.

The hot gases with entrained particles pass upwardly from the gasification reactor into the radiant boiler, then from the radiant boiler into the gas conduit and then downwards into the tube boiler. Cooling means are also provided.

However, the specific solution of the invention in order to avoid deposition of particles wherein the slag droplets-containing syngas is passed and cooled through a tube between a gasifier and a waste heat boiler and only after complete solidification of the slag droplets is further cooled in the waste heat boiler cannot be derived from this publication.

As a feedstock for the present process any carbonaceous fuel can be used. In this specification "carbonaceous fuel" means any combustible material consisting of at least 40% by weight of carbon. The fuel may contain oxygen, sulphur and/or nitrogen. Such a feedstock includes, e.g. lignite, anthracite, bituminous coal, coke, shale oil, mineral oils or oil fractions, tar sand oil or natural gas. The feedstock, if solid, should be in a powdered form so that it can readily react with oxygen in the gasification reactor. Preferably, the size of solid carbonaceous fuel is such that 70% by weight of the fuel has a particle size smaller than 200 mesh (A.S.T.M.).

The oxygen-containing gas includes air, oxygen-enriched air and oxygen, optionally diluted with steam, carbon dioxide and/or nitrogen. Advantageously, the oxygen-containing gas is preheated before it is reacted with the carbonaceous fuel. The preheating of the oxygen-containing gas is suitably carried out indirectly by heat exchange with any heat source, e.g. steam or the hot product gas obtained in the present process. The oxygen-containing gas is preferably preheated to a temperature in the range of 150 to 500°C. After the preheating the hot oxygen-containing gas is advantageously mixed with the carbonaceous fuel in the gasification reactor. In another embodiment the oxygen-containing gas and the fuel are mixed before and the oxygen-containing gas/fuel mixture is introduced, preferably as one or more jets into the gasification reactor.

According to the present invention a process for the production of a hydrogen- and carbon monoxide-containing synthesis gas from a carbonaceous fuel, comprises reacting oxygen with the carbonaceous fuel in a gasification reactor which is preferably kept at an average temperature within the range from 1200 to 2000°C and an average pressure within the range from 2 to 200 bar, the residence time in said gasification reactor being preferably from 1 to 10 seconds.

Preferably, a moderator is also supplied to the gasification reactor. The purpose of the moderator is to exercise a moderating effect on the temperature in the gasification reactor. That is achieved by means of an endothermic reaction between the moderator and the reactant and/or products of the synthesis gas preparation. Suitable moderators are steam and carbon dioxide.

The gasification reactor in which the synthesis gas is prepared has the shape of a vertical cylinder. For preference the gasification reactor has substantially the shape of a circular cylinder.

The carbon-containing fuel and the oxygen-containing gas can be supplied through the bottom of the gasification reactor. It is also possible for one of the reactants to be supplied through the bottom of the gasification reactor and one or more other reactants through the side-wall. Preferably, however, both the fuel as well as the oxygen-containing gas and the moderator are supplied through the side-wall of the gasification reactor. This is advantageously effected by means of at least two burners positioned symmetrically in relation to the gasification reactor axis in a low-lying part of the sidewall.

Part of the slag formed in the partial combustion reaction falls downwards and is discharged through the slag discharge in the bottom of the gasification reactor. Part of the slag, however, is entrained as small droplets by the hot crude synthesis gas leaving the gasification reactor flowing substantially vertically upwards via the gas outlet at the top, preferably at an average linear velocity in the range from 1 to 15 m/s. The presence of slag droplets in the gas may be inconvenient. When the gas is cooled down in a waste heat boiler, the droplets become sticky and may cause a blockage. In order to counteract this, the hot crude synthesis gas is first passed upwards through the cooled tube where it is cooled, preferably to a temperature in the range from 600 to 1200°C.

It has been found that the sticky droplets do not adhere to the wall and do not accumulate inside the tube when the tube has a smooth and relatively cool inner surface. Moreover, a relatively high velocity of the synthesis gas and of the entrained slag particles helps to prevent slag droplets from adhering to the surface of the tube. In order to avoid the contact between the inner wall and the slag droplets as much as possible the tube is preferably straight. When the flow of synthesis gas is to be reversed, this is preferably not done until the slag droplets have solidified. So, the tube advantageously comprises a straight vertically arranged element, connected to the gas outlet of the gasification reactor and a bending element connected to the gas inlet of the heat exchanger.

Another suitable embodiment comprises a tube which is for a major part sloping. When the gas outlet of the gasification reactor is arranged coaxially with the reactor the tube is slightly bended suitably near the gas outlet. It is also possible to provide the gasification reactor with a gas outlet arranged near the top of the reactor such that a straight sloping tube connects the gasification reactor with the heat exchanger.

The hot crude synthesis gas is preferably passed upwards through the tube at an average linear velocity

EP 0 150 533 B2

ranging from 4 to 40 m/s. Thereto the ratio between the inner diameter of the gasification reactor and the inner diameter of the tube connected to the gas outlet of the gasification reactor preferably ranges from 2 to 15. Suitably the tube has an inner diameter of 0.1 to 2.0 m.

In the tube the slag droplets lose heat due to heat radiation. Since the flow of slag-containing synthesis gas is turbulent and since the wall of the tube is cooled some convective heat exchange also occurs. Preferably, the hot crude synthesis gas is cooled in the tube to a temperature in the range from 600 to 1200°C. At temperatures below 1200°C, the slag has solidified and is no longer sticky. A temperature below 600°C is not practically feasible. Moreover, in the heat exchanger high-grade steam can be raised when the synthesis gas is still sufficiently hot, i.e. at a temperature of at least 600°C.

Along at least a part of the length of the tube, preferably along the entire tube, a coolant is passed. Due to heat radiation the coolant is heated while the synthesis gas and the slag droplets are cooled. The inlet temperature of the coolant preferably is between 100 and 400°C and the outlet temperature is suitably between 200 and 600°C. To achieve the most effective cooling, the coolant is preferably passed countercurrently to the flow of the synthesis gas, thus at least for a part in a downward direction. Suitable coolants are water and steam. Preference is given to boiling water at a pressure between 1 and 200 bar as a coolant. Due to the heat transfer from the hot gases in the tube at least part of the water is converted into steam. So, when boiling water is passed along the tube in such an amount that not all water is evaporated, the temperature of the coolant is almost constant.

The solidification of the slag droplets advantageously has completed before the slag leaves the tube. Therefore, the residence time of the slag droplets-containing synthesis gas in the tube is preferably between 0.1 and 2.0 s. The tube suitably has a length between 1 and 20 m.

In conventional coal gasification plants it has been usual to place a heat exchanger for cooling the generated gas above the gasification reactor. For relatively low capacities said arrangement is not unpractical, but for an apparatus in which a high rate of production of $H_2$- and CO-containing gas must be possible, it causes problems owing to the great structural height involved. In an apparatus of said type the reactor and the heat exchanger will, therefore, preferably be located adjacent to each other. The heights of the gasification reactor and the heat exchanger may differ considerably. The reactor is suitably from 6 to 25 m tall while the height of the heat exchanger suitably is from 15 to 40 m. The tube along which the coolant is passed is very suitable for passing the hot synthesis gas across this difference in height.

To prevent sticky slag droplets from hitting the inner wall of the tube connected to the gas outlet of the gasification reactor, said outlet is preferably provided with a constriction. The constriction, the diameter of which is smaller than the one of the tube, warrants that the slag droplets are within a narrow bundle when they enter the tube. This warrants that at least a zone near the constriction is prevented from being hit by sticky particles. To make the constriction as useful as possible the diameter of the constriction and the inner diameter of the tube are in a ratio between 0.3 and 0.9.

In order to cool the hot crude synthesis gas leaving the top of the gasification reactor even quicker this gas may be quenched. The quench is advantageously carried out by injecting cold gas, steam and/or water into the hot crude synthesis gas. Recycled cooled purified synthesis gas is very suitable for this purpose since it substantially does not change the composition of the gas to be cooled. The quench is suitably carried out near the gas outlet of the gasification reactor; this means at the beginning of the tube connected with said gas outlet. When the tube is bended, the quench very suitably is carried out at the beginning of the bend, thereby shielding the bend from slag droplets hitting against and adhering to the curved wall of the tube.

Especially when coal having a high ash content (15 to 40 %wt ash) is converted in the present process it is advantageous to separate slag particles from the crude synthesis gas before the synthesis gas enters the heat exchanger so that the chance of slag being deposited on the internals of the heat exchanger is reduced. Therefore, the connecting means connecting the tube with the gas inlet of the heat exchanger preferably contains means for separating slag particles from the crude synthesis gas.

Such means consist very suitably of one or more impingement separators, bend separators or cyclones in which at least the relatively coarse slag particles are separated from the crude synthesis gas, at least one cyclone being preferred. Slag particles are discharged from the bottom of the cyclone(s), the partially purified synthesis gas being removed from the top of the cyclone(s) and passed to the top of the heat exchanger.

The preferably vertically arranged heat exchanger is advantageously of a type in which the gas to be cooled is conducted substantially vertically downwards around cooling pipes through which coolant, suitably consisting of water, flows, which at least partly is to be transferred to steam.

The average linear velocity of the gas in the heat exchanger is preferably in the range from 3 to 15 m/s. The crude synthesis gas is advantageously cooled in the heat exchanger to a temperature in the range from 200 to 400°C.

After the crude synthesis gas has been cooled in the heat exchanger slag particles are separated there-

4

from in order to purify it further. This separation is carried out using means for separating slag particles from the cooled crude synthesis gas. These means suitably consist of at least one cyclone, bag filter, impingement separator or bend separator and they are connected with the bottom of the heat exchanger by a pipe. For this purpose one or more cyclones are preferred.

The invention will now be further illustrated with reference to the drawings showing diagrammatic representations of the apparatus in which the process according to the invention and its preferred embodiments are carried out, in which drawings auxiliary equipment, such as pumps, compressors, valves, cleaning devices and control instruments are not included.

However, the invention is by no means limited to the description based on these drawings.

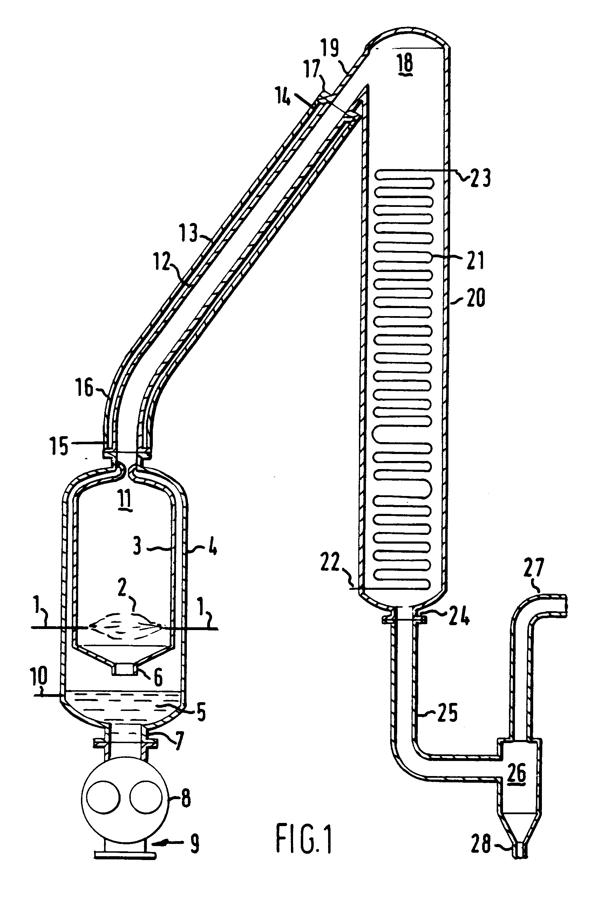

Figure 1 of the drawings represents a simple embodiment of the process according to the invention especially suitable for the conversions of low ash coals i.e. coals having an ash content in the range from 5 to 15 %wt. The gasification reactor comprises a vertical cylindrical outer shell 4 and a gasifier 2. Through burners 1 a mixture of powdered coal, oxygen-containing gas and possibly steam is passed into the gasifier 2 where it is converted to an $H_2$- and CO-containing crude synthesis gas by partial combustion. The gasifier 2 is defined by the lower part of a membrane wall 3 consisting of water tubes through which boiling water is circulated, the water being partly transferred into high pressure steam. The membrane wall 3 is positioned within the vertical cylindrical outer pressure shell 4. At the bottom of the vertical cylindrical outer pressure shell 4 a water bath 5 is present for catching and solidifying liquid slag dropping down from the gasifier 2 through an outlet 6 for liquid slag at the bottom of the water tube wall 3. Liquid slag caught in the water bath 5 solidifies. This material is removed therefrom through an outlet 7 for solidified slag in water. It is passed to a slag crusher 8 where it is crushed to particles with a diameter of at most 50 mm and withdrawn from the system via an outlet 9 together with a volume of water. The proper level of the water in the water bath 5 is maintained by supplying water to it through a line 10. The hot crude synthesis gas generated in the gasifier 2 contains liquid slag droplets. It ascends to a gas outlet 11 which is provided with a constriction formed by the upper part of the tube wall 3. The crude synthesis gas is passed through a tube 12 connected to the gas outlet 11. The tube 12 has a curvature 16 so that the major part of the tube runs slantingly upwards. The tube 12 is surrounded by an outer pipe 13. In the annular space between the tube 12 and the outer pipe 13 a coolant is passed, said coolant being introduced through an inlet 14 and being withdrawn through an outlet 15. The synthesis gas is cooled in the tube 12 and the slag droplets solidify. The slag particles-containing synthesis gas flows through a gas inlet 19 into a space 18 of a heat exchanger 20. The tube 12 is connected to the gas inlet 19 by means of a connecting means 17, which in this embodiment is a flange. In the space 18 the flow of the synthesis gas is reversed and the synthesis gas and the slag particles are passed downwards through the heat exchanger 20, which contains a number of tube banks 21, preferably comprising horizontal tubes. In these tube banks cooling water is evaporated at elevated pressure to high pressure steam, or saturated steam is heated to superheated steam.

The water or steam enters the tube banks 21 via an inlet 22 at its bottom and a water/steam mixture or superheated steam leaves the tube banks via an outlet 23 at its top. Heat is transferred by convection to the tube banks 21, the crude synthesis gas being passed from the top to the bottom of the heat exchanger 20 and being further cooled during its course through the heat exchanger 20.

The cooled crude synthesis gas leaves the heat exchanger 20 via an outlet 24 which is connected by a pipe 25 to a cyclone 26. In the cyclone 26 slag particles are separated from the crude synthesis gas, cooled purified synthesis gas being discharged from the system via a line 27 and separated slag particles being withdrawn from the system via an outlet 28.

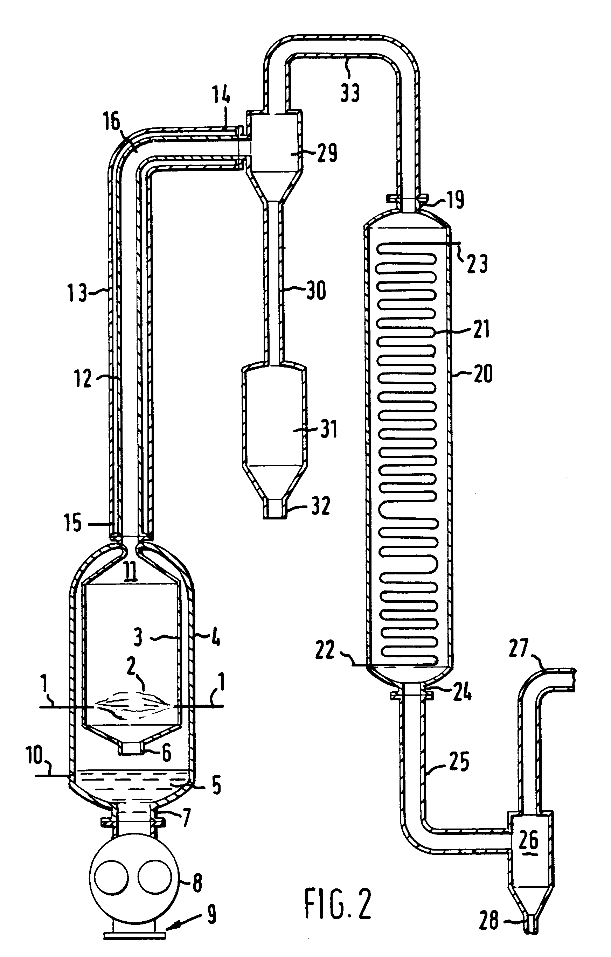

Figure 2 represents a preferred embodiment of the process and apparatus according to the invention and in the process and apparatus outlined in this figure essentially the same constructional parts are used as depicted in figure 1.

The connecting means, connecting the tube 12 with the gas inlet 19, is composed of a cyclone 29 and a pipe 33. The crude synthesis gas which contains solidified slag particles is firstly introduced into the cyclone 29, where relatively coarse slag particles are removed from the synthesis gas. These particles fall down through a pipe 30 into a receiving vessel 31 for slag particles, from which vessel they are discharged via an outlet 32. The synthesis gas from which the relatively coarse particles have been removed is transferred through a pipe 33 to the inlet 19 of the heat exchanger 20 and further treated as has been described hereinbefore with regard to figure 1.

Example

To a gasifier 2 as described with reference to figure 1, 720 kg of coal powder per hour was supplied via the burners 1 in 88 kg of nitrogen, 600 kg of oxygen-containing gas and 60 kg of steam.

The coal powder had an average particle size of 50 μm and, on a dry and ash-free basis, had the following

composition:

C      80.0% by wt.

H      5.8% by wt.

N      1.5% by wt.

O      9.4% by wt.

S      3.3% by wt.

The ash content was 11.0% by weight and the moisture content 2.0% by weight. The oxygen-containing gas had the following composition:

$O_2$      99.0% by vol.

$N_2$      0.3% by vol.

Ar      0.7% by vol.

The pressure in the gasifier was 25 bar and the temperature 1405°C.

Via the top of the gasifier, 1370 kg of synthesis gas was discharged per hour, having a temperature of 1405°C and the following composition:

CO      59.2% by vol.

$H_2$      28.8% by vol.

$CO_2$      2.2% by vol.

$N_2$+Ar      5.2% by vol.

COS+$H_2$S      1.0% by vol.

$H_2O$      3.6% by vol.

The quantity of slag drained via the slag discharge 6 was 53 kg/h.

Per hour 34 kg of slag was entrained with the crude synthesis gas. The carbon content of the slag was 22% by weight.

Through the tube 12 the synthesis gas was passed at an average velocity of 10 m/s. The residence time of the gas in the tube amounted to 1.2 s. As a coolant boiling water having a temperature of 250°C and a pressure of about 40 bar was circulated along the tube 12. Due to heat transfer from the hot synthesis gas part of the boiling water was evaporated, yielding high pressure steam.

At its introduction into the space 18 the synthesis gas had a temperature of 800°C. On its way through the heat exchanger 20 the gas was lowered in temperature to 250°C.It was finally passed through the cyclone 26 where 30 kg/h slag was separated from the gas. The cooled and purified gas leaving the top of the cyclone contained only 0.3 %wt slag which was removed by a water wash.

## Claims

1.    A process for the production of synthesis gas wherein:

a) a finely divided carbonaceous fuel is partially combusted with an oxygen-containing gas at elevated temperature and pressure in a gasification reactor, yielding liquid slag and synthesis gas;

b) part of the liquid slag is removed from the bottom of the gasification reactor;

c) hot crude synthesis gas containing entrained slag droplets leaves the top of the gasification reactor and is removed from the top of the gasification reactor to a waste heat boiler;

d) the crude synthesis gas is passed downwards through the said waste heat boiler to cool it further;

e) the cooled synthesis gas is removed from the lower part of the said waste heat boiler,

characterized by the following steps:

f) the said hot crude synthesis gas leaving the top of the gasification reactor is passing upwards at an average linear velocity ranging from 4 to 40 m/s through a single connection tube of uniform diameter with a smooth inner wall, said single tube connecting the top outlet of said reactor to the waste heat boiler which as a whole is located adjacent or next to said reactor;

g) along at least a part of the said single connection tube a coolant is passed in indirect heat exchange with the crude synthesis gas so that the crude synthesis gas is cooled in the single connection tube to a temperature in the range from 600 to 1200 °C and the slag droplets solidify;

the inlet temperature of the coolant being between 100 and 400 °C and the outlet temperature being between 200 and 600 °C.

2.    The process as claimed in claim 1 characterized in that the hot crude synthesis gas leaving the top of the gasification reactor is flowing substantially vertically upwards at an average linear velocity ranging from 1 to 15 m/s.

3. The process as claimed in claim 1 or 2 characterized in that the residence time of the slag droplets-containing synthesis gas in the tube is between 0.1 to 2.0 s.

4. The process as claimed in any one of claims 1-3 characterized in that the crude synthesis gas flows substantially vertically downwards through the heat exchanger at an average linear velocity ranging from 3 to 15 m/s.

5. The process as claimed in any one of claims 1-4 characterized in that slag particles are separated from the crude synthesis gas before the synthesis gas enters the heat exchanger.

6. An apparatus for carrying out the process as claimed in any one of the claims 1 to 5, comprising the following components:
   a) a vertically positioned gasification reactor with a gas outlet at the top and the slag outlet at the bottom;
   b) a waste heat boiler provided with a gas inlet near its top and a gas outlet near its bottom, and with cooling tubes;
   c) connecting means connecting the gas outlet of the reactor with the gas inlet of the said waste heat boiler;
   characterized in that
   d) the whole waste heat boiler is located adjacent or next to the said reactor;
   e) the gas inlet of the waste heat boiler is connected to the gas outlet of the reactor through a single connection tube of uniform diameter, which connection tube has a smooth inner surface and runs at least for a major part in an upward direction;
   f) an outer pipe surrounding at least a part of said single connection tube, said pipe being provided with an inlet and outlet for coolant and wherein the ratio between the inner diameter of the gasification reactor and the inner diameter of the said connection tube ranges from 2 to 15 and wherein the said tube has an inner diameter in the range of 0.1 to 2.0 metres.

7. The apparatus as claimed in claim 6 characterized in that the ratio between the inner diameter of the gasification reactor and the inner diameter of the tube connected to the gas outlet of the gasification reactor ranges from 2 to 15.

8. The apparatus as claimed in claim 6 or 7 characterized in that the gas outlet of the gasification reactor is provided with a constriction.

9. The apparatus as claimed in claim 8 characterized in that the diameter of the constriction and the inner diameter of the tube are in a ratio between 0.3 and 0.9.

**Patentansprüche**

1. Ein Verfahren zur Herstellung eines Synthesegases, in welchem
   a) ein fein verteilter kohlenstoffhaltiger Brennstoff teilweise mit einem sauerstoffhaltigen Gas bei erhöhter Temperatur und erhöhtem Druck in einem Vergasungsreaktor verbrannt wird, wobei eine flüssige Schlacke und ein Synthesegas erhalten werden,
   b) ein Teil der flüssigen Schlacke vom Boden des Vergasungsreaktors entfernt wird;
   c) heißes Rohsynthesegas, enthaltend mitgerissene Schlacketröpfchen, aus dem oberen Ende des Vergasungsreaktors austritt und von diesem oberen Ende des Vergasungsreaktors abgezogen und einem Abhitzekessel zugeführt wird;
   d) das Rohsynthesegas durch den Abhitzekessel zwecks weiterer Abkühlung nach unten geleitet wird;
   e) das gekühlte Synthesegas vom unteren Teil des Abhitzekessels abgezogen wird;
   gekennzeichnet durch die folgenden Schritte:
   f) das Leiten besagten heißen Synthesegases, welches aus dem oberen Ende des Vergasungsreaktors austritt, in Aufwärtsrichtung bei einer durchschnittlichen linearen Geschwindigkeit im Bereich von 4 bis 40 m/s durch ein einziges Verbindungsrohr von gleichförmigem Durchmesser und mit einer glatten Innenwand, wobei dieses einzige Rohr den oberen Auslaß besagten Reaktors mit dem Abhitzekessel verbindet, der als Ganzes neben oder benachbart zum besagten Reaktor angeordnet ist;
   g) das Führen eines Kühlmittels in indirektem Wärmeaustausch mit dem Rohsynthesegas durch mindestens einen Teil des besagten einzigen Verbindungsrohrs, so daß das Rohsynthesegas in dem einzigen Verbindungsrohr auf eine Temperatur im Bereich von 600 bis 1200°C abgekühlt wird und die Schlacketröpfchen sich verfestigen,
wobei die Einlaßtemperatur des Kühlmittels im Bereich von 100 bis 400°C und die Auslaßtemperatur im Bereich von 200 bis 600°C liegt.

2. Das Verfahren, wie in Anspruch 1 beansprucht, dadurch gekennzeichnet, daß das heiße Rohsynthesegas, das aus dem oberen Ende des Vergasungsreaktors austritt, im wesentlichen vertikal nach oben fließt, bei einer durchschnittlichen linearen Geschwindigkeit im Bereich von 1 bis 15 m/s.

3. Das Verfahren, wie in Anspruch 1 oder 2 beansprucht, dadurch gekennzeichnet, daß die Verweildauer des Schlacketröpfchen enthaltenden Synthesegases in dem Rohr zwischen 0,1 und 2,0 sec. liegt.

4. Das Verfahren, wie in irgendeinem der Ansprüche 1 bis 3 beansprucht, dadurch gekennzeichnet, daß das Rohsynthesegas im wesentlichen vertikal durch den Wärmetauscher nach unten fließt, bei einer durchschnittlichen linearen Geschwindigkeit im Bereich von 3 bis 15 m/s.

5. Das Verfahren, wie in irgendeinem der Ansprüche 1 bis 4 beansprucht, dadurch gekennzeichnet, daß Schlacketeilchen vom Rohsynthesegas abgetrennt werden, bevor das Synthesegas in den Wärmetauscher eintritt.

6. Eine Vorrichtung zur Durchführung des Verfahrens, wie in irgendeinem der Ansprüche 1 bis 5 beansprucht, umfassend die folgenden Komponenten:
   a) einen in vertikaler Position befindlichen Vergasungsreaktor mit einem Gasauslaß am oberen Ende und einem Schlackeauslaß am unteren Ende;
   b) einen Abhitzekessel, welcher mit einem Gaseinlaß nahe seinem oberen Ende und mit einem Gasauslaß nahe seinem unteren Ende und mit Kühlrohren ausgestattet ist;
   c) Verbindungsmittel, welche den Gasauslaß des Reaktors mit dem Gaseinlaß besagten Abhitzekessels verbinden;
   dadurch gekennzeichnet, daß
   d) der gesamte Abhitzekessel neben ober benachbart zum besagten Reaktor angeordnet ist;
   e) der Gaseinlaß des Abhitzekessels mittels eines einzigen Verbindungsrohrs mit gleichförmigem Durchmesser mit dem Gasauslaß des Reaktors verbunden ist, wobei dieses Verbindungsrohr eine glatte Innenwand aufweist und mindestens zum größten Teil in Aufwärtsrichtung verläuft;
   f) eine äußere Rohrleitung, welche mindestens einen Teil des besagten einzigen Verbindungsrohrs umgibt, mit einem Kühlmitteleinlaß und -auslaß versehen ist und daß das Verhältnis des Innendurchmessers des Vergasungsreaktors und des Innendurchmessers des besagten Verbindungsrohrs im Bereich von 2:1 bis 15:1 liegt und besagtes Verbindungsrohr einen Innendurchmesser im Bereich von 0,1 bis 2,0 m aufweist.

7. Die Vorrichtung, wie in Anspruch 6 beansprucht, dadurch gekennzeichnet, daß das Verhältnis zwischem dem Innendurchmesser des Vergasungsreaktors und dem Innendurchmesser des mit dem Gasauslaß des Vergasungsreaktors verbundenen Rohrs im Bereich zwischen 2:1 und 15:1 liegt.

8. Die Vorrichtung, wie in Anspruch 6 oder 7 beansprucht, dadurch gekennzeichnet, daß der Gasauslaß des Vergasungsreaktors mit einer Verengung versehen ist.

9. Die Vorrichtung wie in Anspruch 8 beansprucht, dadurch gekennzeichnet, daß der Durchmesser der Verengung und der Innendurchmesser des Rohres ein Verhältnis von 0,3:1 bis 0,9:1 aufweisen.


## Revendications

1. Un procédé pour la production de gaz de synthèse dans lequel :
   a) Un combustible carboné finement divisé est partiellement brûlé avec un gaz contenant de l'oxygène à température et pression élevées dans un réacteur de gazéification, donnant de la scorie liquide et du gaz de synthèse ;
   b) une partie de la scorie liquide est évacuée du fond du réacteur de gazéification ;
   c) le gaz de synthèse brut chaud contenant des gouttelettes de scorie entraînées quitte le sommet du réacteur de gazéification et est évacué du sommet du réacteur de gazéification vers une chaudière de récupération des chaleurs perdues ;

d) le gaz de synthèse brut est passé de haut en bas à travers la chaudière de récupération des chaleurs perdues de façon qu'il soit encore refroidi ;

e) le gaz de synthèse refroidi est évacué de la partie inférieure de la chaudière de récupération des chaleurs perdues,

caractérisé par les étapes suivantes :

f) le gaz de synthèse brut chaud quittant le sommet du réacteur de gazéification est passé de bas en haut à une vitesse linéaire moyenne comprise entre 4 et 40 m/s dans un tube de jonction unique de diamètre uniforme ayant une paroi intérieure lisse, ce tube unique reliant la sortie du haut du réacteur à la chaudière de récupération des chaleurs perdues qui est située dans son ensemble près ou à côté du réacteur ;

g) le long d'au moins une partie du tube de jonction unique, un fluide de refroidissement est passé en échange indirect de chaleur avec un gaz de synthèse brut, de sorte que le gaz de synthèse brut est refroidi dans le tube de jonction unique à une température comprise entre 600 et 1200°C et que les gouttelettes de scorie se solidifient;

la température d'entrée du fluide de refroidissement étant comprise entre 100 et 400°C et sa température de sortie étant comprise entre 200 et 600°C.

2.  Le procédé selon la revendication 1 caractérisé en ce que le gaz de synthèse brut chaud quittant le sommet du réacteur de gazéification s'écoule vers le haut dans une direction sensiblement verticale à une vitesse linéaire moyenne comprise entre 1 et 15 m/s.

3.  Le procédé selon la revendication 1 ou 2 caractérisé en ce que le temps de séjour du gaz de synthèse contenant les gouttelettes de scorie dans le tube est compris entre 0,1 et 2 secondes.

4.  Le procédé selon l'une quelconque des revendications 1 - 3 caractérisé en ce que le gaz de synthèse brut s'écoule dans une direction sensiblement verticale vers le bas à travers l'échangeur de chaleur à une vitesse linéaire moyenne comprise entre 3 et 15 m/s

5.  Le procédé selon l'une quelconque des revendications 1 - 4 caractérisé en ce que les particules de scorie sont séparées du gaz de synthèse brut avant que le gaz de synthèse n'entre dans l'échangeur de chaleur.

6.  Un appareil pour la mise en oeuvre du procédé selon l'une quelconque des revendications 1 - 5, comprenant les éléments suivants :

a) un réacteur de gazéification disposé verticalement avec une sortie pour gaz au sommet et une sortie pour scorie au fond ;

b) une chaudière de récupération des chaleurs perdues avec une entrée pour gaz près de son sommet et une sortie pour gaz près de son fond, et avec des tubes de refroidissement ;

c) des moyens de jonction reliant la sortie pour gaz du réacteur à l'entrée pour gaz de la chaudière de récupération des chaleurs perdues ;

caractérisé en ce que :

d) la chaudière de récupération des chaleurs perdues est située an totalité près ou à côté du réacteur ;

e) l'entrée pour gaz de la chaudière de récupération des chaleurs perdues est reliée à la sortie pour gaz du réacteur par un tube de jonction unique de diamètre uniforme, lequel tube de jonction a une surface intérieure lisse et est disposé au moins en majeure partie dans une direction verticale ;

f) un tuyau extérieur entoure au moins une partie du tube de jonction unique, ce tuyau comportant une entrée et une sortie pour un fluide de refroidissement, le rapport entre le diamètre intérieur du réacteur de gazéification et le diamètre intérieur du tube de jonction est compris entre 2 et 15 et ce tube a un diamètre intérieur compris entre 0,1 et 2,0 mètres.

7.  L'appareil selon la revendication 6 caractérisé en ce que le rapport entre le diamètre intérieur du réacteur de gazéification et le diamètre intérieur du tube relié à la sortie pour gaz du réacteur de gazéification est compris entre 2 et 15.

8.  L'appareil selon la revendication 6 ou 7 caractérisé en ce que la sortie pour gaz du réacteur de gazéification comporte un étranglement.

9.  L'appareil selon la revendication 8 caractérisé en ce que le diamètre de l'étranglement et le diamètre intérieur du tube sont dans un rapport compris entre 0,3 et 0,9.

FIG.1

FIG.2